Europäisches Patentamt

European Patent Office

Office européen des brevets

(11) Publication number: **0 203 035 B1**

# EUROPEAN PATENT SPECIFICATION

(45) Date of publication of patent specification: **12.08.92**   (51) Int. Cl.⁵: **B23Q  1/02**

(21) Application number: **86830075.7**

(22) Date of filing: **25.03.86**

(54) **System for guiding a movable upright of a machine tool which improves the working accuracy of the machine.**

(30) Priority: **22.05.85 IT 2084485**

(43) Date of publication of application:
**26.11.86 Bulletin  86/48**

(45) Publication of the grant of the patent:
**12.08.92 Bulletin  92/33**

(84) Designated Contracting States:
**CH DE FR GB LI**

(56) References cited:
**DE-A- 1 477 869**
**DE-A- 2 032 334**
**DE-A- 2 224 761**
**FR-A- 1 406 665**

**WERKSTATT UND BETRIEB, vol. 113, no. 10,
October 1980, pages 683-684; F. BOSSO:
"Kopierfräsen grosser räumlicher Konturen"**

**IDEM**

(73) Proprietor: **MAUT S.p.A.
Via Passerina, 38
I-27058 Voghera(IT)**

(72) Inventor: **Natino, Alberto
Via Carlo Mirabello 31/A
I-15057 Tortona (Alessandria)(IT)**

(74) Representative: **Frank, Gerhard, Dipl.-Phys.
Patentanwälte Dr. F. Mayer & G. Frank West-
liche 24
W-7530 Pforzheim(DE)**

## Description

This invention relates in general to machine tools having a movable upright and, more specifically, to a system for guiding said upright such that the machine is enabled to maintain its working accuracy at the high level required.

Modern machine tools equipped with movable upright, such as combined milling and boring machines, utilize at present two basic guide systems for the movable upright namely:

1) a guide system wherein the slideways for the upright are disposed on a side of the fixed work-bed, one above the other, and extend along the length of the bed, said slideways cooperating with mating slideways on the carriage which is secured to a side of the upright, at a lower portion thereof. By this guide system the upright is mounted in an overhanging manner on, and can move in two directions sideways of the bed (see Italian Patent N.860,163),

2) a guide system wherein the slideways for the upright are provided on a base anchored to the ground through foundations, and cooperate with the slideways on the upright carriage which is secured to a lower part of the upright, the work-bed being independent of the upright and secured to a side thereof. By this guide system the upright is bearing on its guides and can move in two directions laterally thereof.

The above first system for guiding a movable upright has a drawback in that the horizontally directed forces that are applied to the movable upright by the tool spindle during machining operation tend to create side-overturning torques in the upright which are detrimental to the working accuracy of the machine. Another drawback is the weight of the upright assembly which is always mounted to be overhanging with respect of the bed, though there is an advantage in that the upright and the bed are at any time looked with one another. A further disadvantage of this guide system is that the upright cannot perform transverse movements relative to the work-carrying bed.

As to the second system for guiding the movable upright referred to above, if this system has an advantage in that very reduced loads are applied to the guides, it has, however, the disadvantage that separate foundations are to be provided for the upright with all the troubles this is likely to entail, such as the need for accurate laying-down of said foundation in the ground which is time-consuming and requires very careful operations. And, here again, the lack of a mechanical attachment to the work-bed may be a cause of slight inaccuracies of a machine tool. On the other hand, this guide system permits the upright to perform transverse movements in order to have the tool spindle displacing in a transverse direction, due to the fact that the upright carriage travels on its own ways so that it can be designed to have such a width as to allow said transverse movements of the upright.

"Werkstatt und Betrieb", 113 (1980) 10, pages 683-4, describes a machine-tool guide system comprising a main guide provided at the upper portion of a bed side and a secondary guide provided at the lower portion of the same bed side, said guides cooperating with complementary guides provided on the upright. This main guide has 1 free axis, whereas the secondary guide has 2 free axes. This guiding system comprises also a socalled third guide arranged on the side of the upright which is opposed to that to which it is mounted on the bed. This socalled third guide is not a guide proper, but it is a simple bearing having $2\frac{1}{2}$ free axes. To sum up, this guiding system comprises two guides, namely a main guide and a secondary guide, and a bearing on which the upright bears.

It is an object of this invention to provide a new system for guiding a movable upright of machine tool by which the above mentioned disadvantages are eliminated and which, at the same time, combines in it all of the advantages of both said known systems.

More specifically, the system for guiding the movable upright of a machine-tool of the type having a bed, an upright and a carriage for supporting the upright for movement along the bed, the guiding system comprising a machine bed, a carriage having at least two guides and a base arranged beneath the carriage, extending beside and parallel to the length of the bed and having a horizontally disposed bearing surface, the guides cooperating with slideways located on the base and/or on the bed is characterized in that the guiding system comprises only two slideways and two corresponding guides cooperating therewith, one slideway being arranged on the side of the bed facing the base and cooperating with one of said two guides of the carriage, and the other slideway being arranged on a bearing surface on the side of said base facing away from said bed and cooperating with the other of said two guides of the carriage.

The invention will be described more in detail in the following with reference to a preferred embodiment thereof shown by way of example and not intended in a limiting sense in the accompanying drawings, in which:

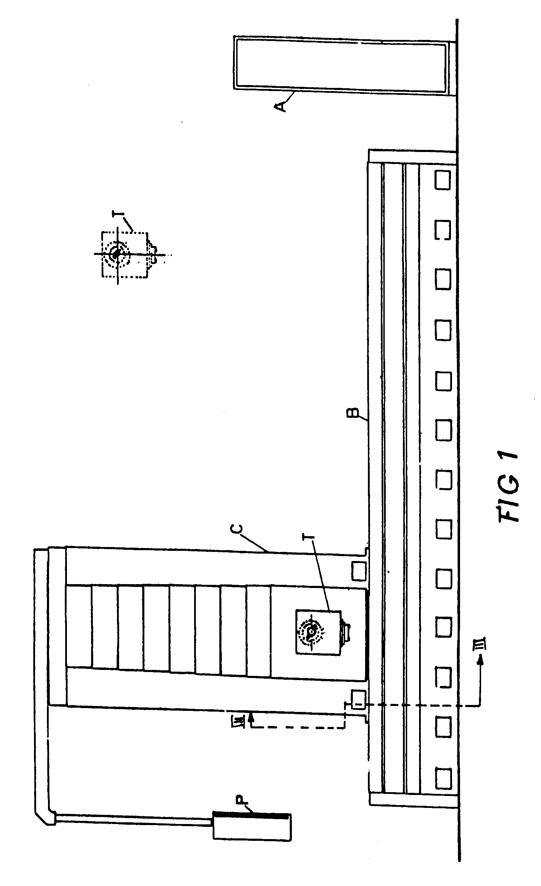

- Figure 1 is a side elevation view of a combined milling and boring machine having a movable upright according to the invention;
- Figure 2 is a front view of the machine in figure 1, and

- Figure 3 is a sectional view taken along III-III in figure 1.

The above figures show by way of example a combined milling and boring machine including a work-table or bed B, an upright C supporting a spindlehead T, said spindlehead T being provided with a change-speed box S and a d.c. electric motor M by which the spindle is rotated through gearbox S at the different working speeds required. The entire head-gearbox-motor assembly is capable of performing a transverse movement with respect to the upright C on guides (not shown), as well as a vertical movement along the upright C. All of the movement of the machine are controlled by a centralized station A and through a pendant P. Thus, the spindlehead can take any required position for the machining operation, such as the dash-line positions shown in the figures.

The machine tool shown is such that the carriage 10 of upright C is supported, on the one hand, on the bed B and, on the other hand, on a base 12 that is locked to the bed and is provided on its free side with a longitudinal guide on which the other side of carriage 10 is supported.

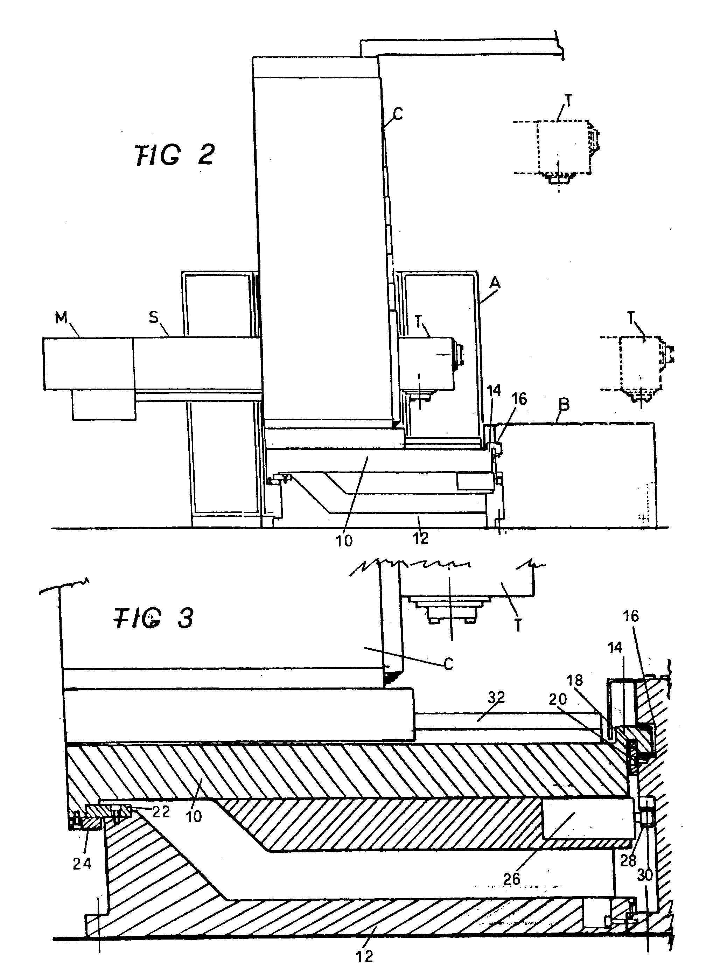

More specifically, the carriage 10 has on its right side (figures 2 ane 3) a U-shaped guide 14 which is received in a guide 16 provided on the facing side of bed B, the guide 16 being closed by a gib 18 which is received in the groove formed by the U-shaped guide 14 and is fastened to the bed by the aid of screw means 20 or the like.

The longitudinal guide on the base 12 is formed by a gib 22 fastened to a raised side of the base 12 and extending in a horizontal direction, said gib 22 being designed to retain a further gib 24 that is secured to carriage 10 of upright C to act as a stop for the gib 22 of the base 12.

An electric motor 26 is provided underneath the carriage 10 and drives a pinion 28 meshing with a rack 30 secured to the bed B to permit the upright C to be translated along the bed B.

The base 12 extends in a transverse direction by a width that is greater than the width of upright C, whereby it becomes possible to provide also for a transverse translation of said upright C with respect to the base and this translation is the larger in length, the greater in width is the base 12 and, thus, the carriage 10 supporting the upright. In order to allow said translation of upright C, guides 32 are provided on carriage 10 to cooperate with guides on the upright.

From the above it should be apparent that the described guiding system improves working accuracy of the machine in that the guide 14 on carriage 10 received in the guide 16 on bed B and secured thereto by means of the gib 18, in conjunction with the guide 22,24 on base 12, will practically take up the static and dynamic forces applied in both the vertical and horizontal direction on the spindlehead and the upright C, due to the base being rigidly locked to said bed.

Obviously, the base 12 can be detached from the bed B. Also, the above described guides may be arranged and formed in a different manner from that shown without departing from the invention as claimed. Moreover, providing a base that can be larger in width than is the upright permits the upright to be imparted the transverse movement which was heretobefore only possible on machine tools with upright detached from the bed.

To sum up, the guiding system according to the invention for guiding the upright of movable-upright machine tools achieves the end aimed at, that is to avoid the little working inaccuracies occurring in a machine tool as a result of the forces involved on the upright during work-machining operations, in that the upright carriage is, on the one hand, secured to the bed and, on the other hand, to the base, which latter is in turn able to be secured to the bed thereby providing a construction wherein the forces applied on the upright are transferred to the bed, which bed has a floor-bearing surface that is the sum of its own ground-bearing surface plus that of the base, as a result of which a particularly stable structure is obtained.

## Claims

1. System for guiding the movable upright of a machine-tool of the type having a bed, an upright and a carriage for supporting the upright for movement along the bed, the guiding system comprising a machine bed (B), a carriage (10) having at least two guides and a base (12), arranged beneath the carriage, extending beside and parallel to the length of the bed and having a horizontally disposed bearing surface (22), the guides cooperating with slideways located on the base and/or on the bed, characterized in that the guiding system comprises only two slideways (16,22) and two corresponding guides (14,24) cooperating therewith, one slideway (16) being arranged on the side of the bed facing the base and cooperating with one of said two guides (14) of the carriage, and the other slideway (22) being arranged on a bearing surface on the side of said base facing away from said bed and cooperating with the other (24) of said two guides of the carriage.

2. System according to claim 1, characterized in that said one slideway is extending all along the length of the bed.

3. System according to claim 1, characterized in that said base is fastened to the bed.

4. System according to claim 1, characterized in that said base is detached from the bed.

**Revendications**

1. Système pour guider une colonne mobile d'une machine-outil du genre ayant un banc, une colonne et un chariot pour supporter la colonne pour le mouvement le long du banc, ledit système comportant un banc (B), un chariot (10) ayant au moins deux guides et un bâti (12) arrangé au dessous du chariot qui s'étends latéralement et parallèle à la longueur du banc et ayant une surface de support (22) prévue horizontalement, lesdits guides coopérant avec des glissières arrangées sur le bâti et/ou sur le banc, caractérisé en ce que le système pour le guidage comporte deux seules glissières (16, 22) et deux guides correspondents (14, 24) coopérant avec lesdites glissières, une glissière (16) étant arrangée au côté du banc situé en face du bâti et coopérant avec l'un desdits deux guides (14) du chariot, et l'autre glissière (22) étant arrangée sur une surface de support au côté du bâti opposé audit banc et coopérant avec l'autre (24) desdits guides du chariot.

2. Système selon la revendication 1, caractérisé en ce que ladite glissière s'étends le long de la langueur entière du banc.

3. Système selon la revendication 1, caractérisé en ce que ledit bâti est fixé audit banc.

4. Système selon la revendication 1, caractérisé en ce que ledit bâti est séparé dudit banc.

**Patentansprüche**

1. Anordnung zum Führen der beweglichen Säule einer Werkzeugmaschine von der Art mit einem Bett, einer Säule und einem Schlitten zum Abstützen der entlang des Bettes zu bewegenden Säule, die Führungsanordnung bestehend aus einem Bett (B), einem Schlitten (10) mit mindestens zwei Führungen und einem unterhalb des Wagens angeordneten Untergestell (12), das sich seitlich und parallel zur Bettlänge erstreckt und eine horizontal angeordnete Tragfläche (22) aufweist, wobei die Führungen mit auf dem Untergestell und/oder dem Bett vorgesehenen Gleitbahnen zusammenarbeiten, dadurch gekennzeichnet, daß die Führungsanordnung nur zwei Gleitbahnen (16, 22) und zwei entsprechende damit zusammenarbeitende Führungen (14, 24) aufweist, wobei die Gleitbahn (16) auf der dem Untergestell zugewandten Seite des Bettes vorgesehen ist und mit einer der Führungen (14) des Schlittens zusaammenarbeitet und wobei die andere Gleitbahn (22) auf einer dem Bett abgewandten Seite des Untergestells vorgesehenen Tragfläche vorgesehen ist und mit der anderen (24) der beiden Führungen des Schlittens zusammenarbeitet.

2. Anordnung nach Anspruch 1, dadurch gekennzeichnet, daß sich eine Gleitbahn über die gesamte Länge des Bettes erstreckt.

3. Anordnung nach Anspruch 1, dadurch gekennzeichnet, daß das Untergestell am Bett befestigt ist.

4. Anordnung nach Anspruch 1, dadurch gekennzeichnet, daß das Untergestell vom Bett getrennt ist.

EP 0 203 035 B1

**FIG 1**

*FIG 2*

M   S   C   T   A   T   14   16   B

10   12

*FIG 3*

T   C   32   20   18   14   16

22   10   26   28   30

24   12